# EUROPÄISCHE PATENTSCHRIFT

(11) **EP 0 979 939 B1**
(45) Veröffentlichungstag und Bekanntmachung des Hinweises auf die Patenterteilung: **04.10.2006**
(21) Anmeldenummer: 99114993.1
(22) Anmeldetag: 31.07.1999
(51) Int. Cl.: F02M 37/10

(54) **Kraftstoffversorgungsanlage**
Fuel supply system
Système d'alimentation en carburant

(30) Priorität: 10.08.1998 DE 19836058; 10.07.1999 DE 19932356
(43) Veröffentlichungstag der Anmeldung: 16.02.2000
(73) Patentinhaber: SIEMENS AKTIENGESELLSCHAFT, 80333 München (DE)
(72) Erfinder: Sinz, Wolfgang , Dr., 65843 Sulzbach (DE); Eck, Karl, 60318 Frankfurt (DE); Teichert, Michael, 65824 Schwalbach (DE)

(56) Entgegenhaltungen:
- DE-A- 4 212 698
- JP-A- 3 074 564
- JP-A- 6 330 828
- US-A- 4 860 714
- US-A- 5 111 844
- US-A- 5 197 444
- "FUEL PUMP AND RESERVOIR (HORIZONTALLY MOUNTED)" RESEARCH DISCLOSURE,GB,INDUSTRIAL OPPORTUNITIES LTD. HAVANT, Nr. 349, 1. Mai 1993 (1993-05-01), Seite 332 XP000377251 ISSN: 0374-4353
- PATENT ABSTRACTS OF JAPAN vol. 015, no. 253 (M-1129), 27. Juni 1991 (1991-06-27) & JP 03 081555 A (AISAN IND CO LTD), 5. April 1991 (1991-04-05)

## Beschreibung

Die Erfindung betrifft eine Kraftstoffversorgungsanlage zum Fördern von Kraftstoff zu einer Brennkraftmaschine eines Kraftfahrzeuges mit zwei in einem Kraftstoffbehälter angeordneten und parallel geschalteten Fördereinheiten.

Derartige Kraftstoffversorgungsanlagen mit einfach geformten, kastenförmigen Tanks sind aus der JP 06330828 und der JP 03074564 bekannt.

Es sind weiterhin Kraftstoffversorgungsanlagen mit nur einer Fördereinheit bekannt, bei der die Fördereinheit meist an einem in eine Öffnung des Kraftstoffbehälters eingesetzten Halteteil befestigt und ragt in einen Schwalltopf des Kraftfahrzeuges hinein. Bei heutigen meist verwinkelt oder sattelförmig geformten Kraftstoffbehältern sind in von der Fördereinheit entfernten Bereichen Saugstrahlpumpen angeordnet. Diese Saugstrahlpumpen werden von der Fördereinheit angetrieben und fördern Kraftstoff in den Schwalltopf. Die Leistung der Fördereinheit ist abhängig von der Anzahl und Größe der Saugstrahlpumpen sowie von den Anforderungen der Brennkraftmaschine bezüglich Förderdruck und Fördervolumen.

Nachteilig bei der bekannten Kraftstoffversorgungsanlage ist, dass die Fördereinheit für eine besonders leistungsstarke Brennkraftmaschine oder für einen besonders verwinkelten Kraftstoffbehälter mit mehreren Saugstrahlpumpen sehr stark dimensioniert werden muss. Hierdurch benötigt die Fördereinheit eine hohe Stromaufnahme und große Abmessungen. Weiterhin sind für den Betrieb einer einzelnen Saugstrahlpumpe im Kraftstoffbehälter insgesamt zwei Schläuche zu verlegen. Insbesondere bei den verwinkelten Kraftstoffbehältern gestaltet sich die Verlegung der Schläuche und die Montage der Saugstrahlpumpe deshalb sehr kostenintensiv.

Der Erfindung liegt das Problem zugrunde, eine Kraftstoffversorgungsanlage der eingangs genannten Art so zu gestalten, daß sie bei verwinkelten Kraftstoffbehältern und für besonders leistungsstarke Brennkraftmaschinen eingesetzt werden kann und dabei möglichst kostengünstig aufgebaut ist.

Dieses Problem wird erfindungsgemäß gelöst durch eine zweite in dem Kraftstoffbehälter angeordnete Fördereinheit, wobei die zweite Fördereinheit zum Betrieb zumindest einer Kraftstoff in einen Schwalltopf der ersten Fördereinheit fördernden Saugstrahlpumpe gestaltet ist.

Durch diese Gestaltung benötigt die erfindungsgemäße Kraftstoffversorgungsanlage zumindest eine Saugstrahlpumpe weniger als die bekannte Kraftstoffversorgungsanlage. Dies führt zu einer Verringerung der Anzahl der im Kraftstoffbehälter zu verlegenden Schläuche. Da sich die Volumenströme der Fördereinheit addieren, lassen sich dank der Erfindung auch für leistungsstarke Brennkraftmaschinen leistungsschwache Fördereinheiten einsetzen. Die leistungsschwachen Fördereinheiten benötigen jeweils eine geringe Stromaufnahme und damit kostengünstige elektrische Anschlußleitungen. Weiterhin können die Fördereinheiten wegen ihrer geringen Abmessungen in besonders verwinkelten Kraftstoffbehältern eingesetzt und durch entsprechend kleine Montageöffnungen im Kraftstoffbehälter montiert werden.

Eine gleichmäßige Leerung von Schwalltöpfen der Fördereinheiten läßt sich gemäß einer anderen vorteilhaften Weiterbildung der Erfindung gewährleisten, wenn jede der Fördereinheiten mit einer Saugstrahlpumpe verbunden ist und wenn die Saugstrahlpumpen zum Fördern in Schwalltöpfe der jeweils anderen Fördereinheit ausgebildet sind.

Zur weiteren Vergleichmäßigung des Befüllens der Schwalltöpfe trägt es gemäß einer anderen vorteilhaften Weiterbildung der Erfindung bei, wenn eine von einem Druckregler zurückführende Rücklaufleitung in die Schwalltöpfe beider Fördereinheiten geführt ist.

In einer weiteren vorteilhaften Ausgestaltung ist in jeder, der in die Schwalltöpfe führenden Rücklaufleitungen, je ein Schwimmerventil angeordnet. Durch diese Schwimmerventile läßt sich der Rücklaufstrom des Kraftstoffs steuern. In gewissen Fahrsituationen kann es sich ergeben, dass sich der Kraftstoff nur in einer der Kammern des Kraftstoffbehälters ansammelt. Zusätzlich würde der aus dem Rücklauf stammende Kraftstoff ohne die Schwimmerventile bevorzugt dem in dieser Kammer angeordneten und bereits gefüllten Schwalltopf zufließen. Dadurch kann die kritische Situation entstehen, daß die in der anderen Kammer angeordnete Fördereinheit nicht mehr ausreichend Kraftstoff in die Vorlaufleitung fördert und der Vorlaufdruck daraufhin zusammenbricht. Dieser Fall wird durch die Anordnung der Schwimmerventile vermieden. Das Schwimmerventil in der gefüllten Kammer schließt aufgrund des hohen Kraftstoffniveaus den in diesen Schwalltopf führenden Teil der Rücklaufleitung, während das Schwimmerventil im anderen Teil der Rücklaufleitung offen ist. Somit wird der gesamte Kraftstoff des Rücklaufs der Fördereinheit in der leeren Kammer zugeführt und eine ausreichende Versorgung beider Fördereinheiten mit Kraftstoff sichergestellt.

Ebenso ist es vorteilhaft, wenn beide Saugstrahlpumpen in eine gemeinsame Leitung fördern, die sich anschließend auf beide Schwalltöpfe aufteilt. Durch die Anordnung von je einem Schwimmerventil in jeder der zu den Schwalltöpfen führenden gemeinsamen Leitung, läßt sich der Förderstrom der Saugstrahlpumpen analog dem Rücklaufstrom steuern.

Eine Parallelschaltung der Fördereinheiten erfordert gemäß einer anderen vorteilhaften Weiterbildung der Erfindung einen besonders geringen baulichen Aufwand, wenn die Fördereinheiten jeweils eine zu der Vorlaufleitung führende Förderleitung haben. Hierdurch können zwei baugleiche Fördereinheiten eingesetzt werden, so daß sich eine Serienfertigung der erfindungsgemäßen Kraftstoffversorgungsanlage besonders kostengünstig gestaltet.

Eine gegenseitige Beeinflussung der beiden Fördereinheiten läßt sich gemäß einer anderen vorteilhaften Weiterbildung der Erfindung vermeiden, wenn in jeder der Förderleitungen ein Rückschlagventil angeordnet ist.

Die Erfindung läßt zahlreiche Ausführungsformen zu. Zur weiteren Verdeutlichung ihres Grundprinzips sind zwei davon in den Zeichnungen dargestellt und werden nachfolgend beschrieben.

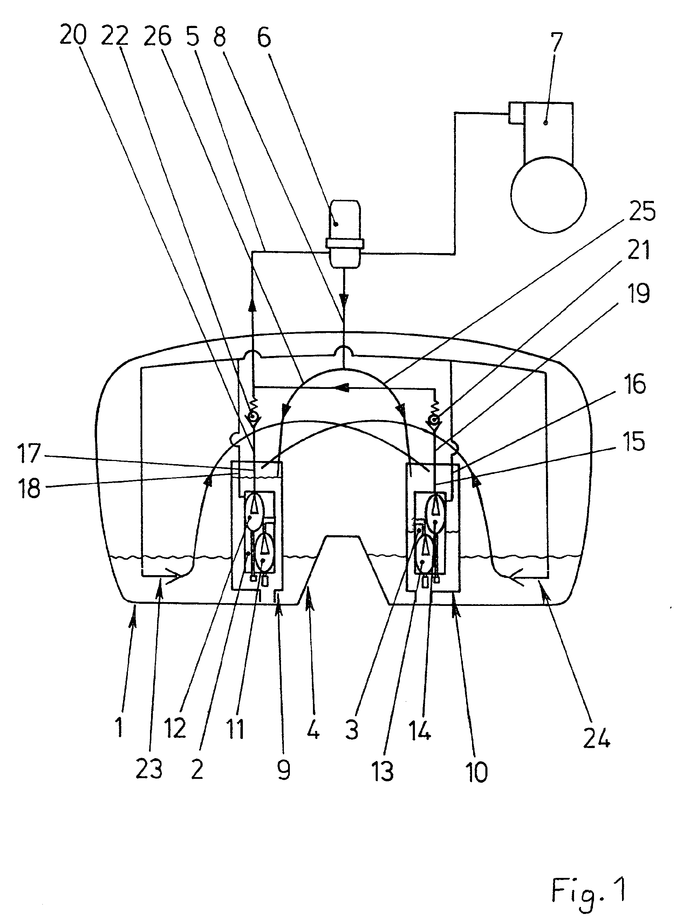

Die Figur 1 zeigt schematisch eine Kraftstoffversorgungsanlage mit zwei in einem Kraftstoffbehälter 1 angeordneten Fördereinheiten 2, 3. Der Kraftstoffbehälter 1 hat einen Sattel 4. Von dem Kraftstoffbehälter 1 führt eine Vorlaufleitung 5 über einen Druckregler 6 zu einer Brennkraftmaschine 7. An dem Druckregler 6 ist eine in den Kraftstoffbehälter 1 geführte Rücklaufleitung 8 angeschlossen.

Die Fördereinheiten 2, 3 saugen jeweils Kraftstoff aus Schwalltöpfen 9, 10 und fördern diesen mittels zweier Kraftstoffpumpen 11 - 14 zu zwei Auslässen 15 - 18. Jeweils an einem der Auslässe 15, 17 der Fördereinheiten 2, 3 sind jeweils zu der Vorlaufleitung 5 führende Förderleitungen 19, 20 mit Rückschlagventilen 21, 22 angeschlossen. Die Fördereinheiten 2, 3 sind hierdurch parallel geschaltet. Die Rückschlagventile 21, 22 verhindern eine gegenseitige Beeinflussung der Fördereinheiten 2, 3. Der jeweils andere Auslaß 16, 18 der Fördereinheiten 2, 3 ist mit zwei im Kraftstoffbehälter 1 angeordneten Saugstrahlpumpen 23, 24 verbunden. Die Saugstrahlpumpen 23, 24 fördern Kraftstoff aus dem Kraftstoffbehälter 1 zu den jeweils gegenüberliegenden Schwalltöpfen 9, 10. Hierdurch wird sichergestellt, daß die Schwalltöpfe 9, 10 der Fördereinheiten 2, 3 auch bei längeren Kurvenfahrten oder Bergfahrten des Kraftfahrzeuges ständig mit Kraftstoff aus allen Bereichen des Kraftstoffbehälters 1 befüllt werden. Weiterhin teilt sich die Rücklaufleitung 8 innerhalb des Kraftstoffbehälters 1 in zwei jeweils zu den Schwalltöpfen 9, 10 führende Teilstücke 25, 26 auf. Die beiden Schwalltöpfe 9, 10 werden hierdurch gleichmäßig mit Kraftstoff befüllt.

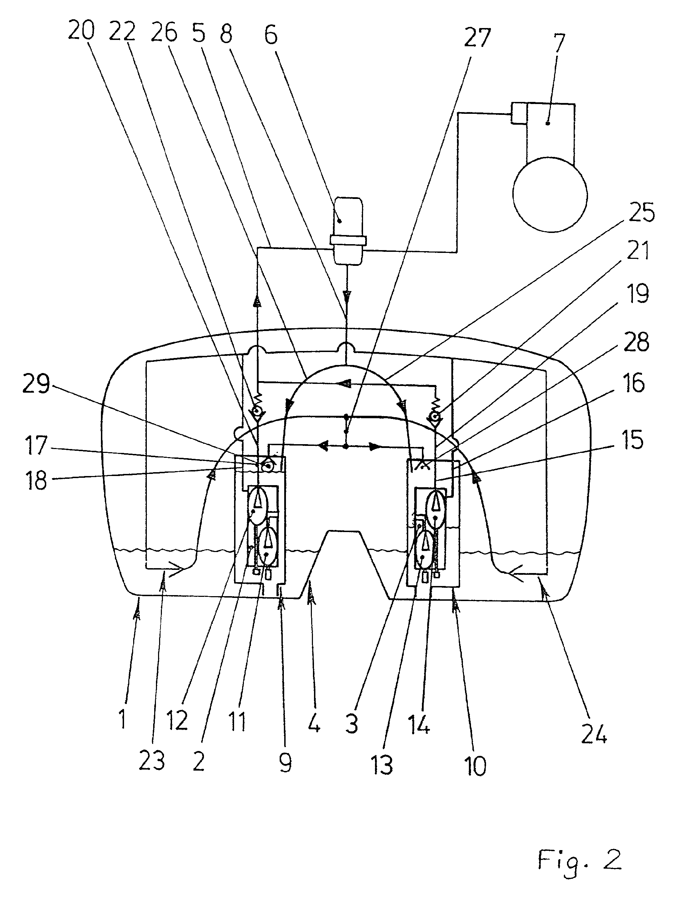

Figur 2 zeigt eine Kraftstoffversorgungsanlage mit einem Grundaufbau wie in Figur 1. Einziger Unterschied ist eine gemeinsame Leitung 27 in die beide Saugstrahlpumpen 23, 24 fördern. Im weiteren Verlauf teilt sich die gemeinsame Leitung 27 auf die Schwalltöpfe 9, 10 der Fördereinheiten 2, 3 auf. Jeder dieser beiden Leitungen ist in den jeweiligen Schwalltöpfen 9, 10 je ein Schwimmerventil 28, 29 zugeordnet. Damit läßt sich der Förderstrom der Saugstrahlpumpen 23, 24 in Abhängigkeit von der Befüllung der Schwalltöpfe 9, 10 steuern.

## Patentansprüche

1. Kraftstoffversorgungsanlage zum Fördern von Kraftstoff zu einer Brennkraftmaschine (7) eines Kraftfahrzeuges mit zwei in einem Kraftstoffbehälter angeordneten und parallel geschalteten Fördereinheiten (2, 3), **dadurch gekennzeichnet, dass** die zweite Fördereinheit (2, 3) zum Betrieb zumindest einer Kraftstoff in einen Schwalltopf (9, 10) der ersten Fördereinheit (2, 3) fördernden Saugstrahlpumpe (23, 24) gestaltet ist.

2. Kraftstoffversorgungsanlage nach Anspruch 1 **dadurch gekennzeichnet, daß** jede der Fördereinheiten (2, 3) mit einer Saugstrahlpumpe (23, 24) verbunden ist und daß die Saugstrahlpumpen (23, 24) zum Fördern in Schwalltöpfe (9, 10) der jeweils anderen Fördereinheit (2, 3) ausgebildet sind.

3. Kraftstoffversorgungsanlage nach Anspruch 1 oder 2, **dadurch gekennzeichnet, daß** jede der Fördereinheiten (2, 3) mit einer Saugstrahlpumpe (23, 24) verbunden ist und daß die Saugstrahlpumpen (23, 24) in eine gemeinsame Leitung (27) fördern, daß die gemeinsame Leitung zur Befüllung der Schwalltöpfe (9, 10) beider Fördereinheiten (2, 3) ausgebildet ist und daß in jeder zu den Fördereinheiten (2, 3) führenden Leitung (27) je ein Schwimmerventil angeordnet ist.

4. Kraftstoffversorgungsanlage nach zumindest einem der vorhergehenden Ansprüche, **dadurch gekennzeichnet, daß** eine von einem Druckregler (6) zurückführende Rücklaufleitung (8) in die Schwalltöpfe (9, 10) beider Fördereinheiten (2, 3) geführt ist.

5. Kraftstoffversorgungsanlage nach Anspruch 4, **dadurch gekennzeichnet, daß** in jeder zu den Fördereinheiten (2, 3) führenden Rücklaufleitung (8) je ein Schwimmerventil angeordnet ist.

6. Kraftstoffversorgungsanlage nach zumindest einem der vorhergehenden Ansprüche, **dadurch gekennzeichnet, daß** die Fördereinheiten (2, 3) jeweils eine zu der Vorlaufleitung (5) führende Förderleitung (19, 20) haben.

7. Kraftstoffversorgungsanlage nach zumindest einem der vorhergehenden Ansprüche, **dadurch gekennzeichnet, daß** in jeder der Förderleitungen (19, 20) ein Rückschlagventil (21, 22) angeordnet ist.

## Claims

1. Fuel supply system for feeding fuel to an internal combustion engine (7) of a motor vehicle with two feed units (2, 3) arranged in a fuel tank and connected in parallel, **characterized in that** the second feed unit (2, 3) is designed for the operation of at least one suction jet pump (23, 24) feeding fuel into a swirl pot (9, 10) of the first feed unit (2, 3).

2. Fuel supply system according to Claim 1, **characterized in that** each of the feed units (2, 3) is connected to a suction jet pump (23, 24) and **in that** the suction jet pumps (23, 24) are designed for feeding into swirl pots (9, 10) of the other respective feed unit (2, 3).

3. Fuel supply system according to Claim 1 or 2, **characterized in that** each of the feed units (2, 3) is connected to a suction jet pump (23, 24) and **in that** the suction jet pumps (23, 24) feed into a common line (27), **in that** the common line is designed for filling the swirl pots (9, 10) of the two feed units (2, 3) and **in that** one respective float valve is arranged in each line (27) leading to the feed units (2, 3).

4. Fuel supply system according to at least one of the preceding claims, **characterized in that** one of the return lines (8) leading back from a pressure regulator (6) is guided into the swirl pots (9, 10) of the two feed units (2, 3).

5. Fuel supply system according to Claim 4, **characterized in that** one respective float valve is arranged in each return line (8) leading to the feed units (2, 3).

6. Fuel supply system according to at least one of the preceding claims, **characterized in that** the feed units (2, 3) have one respective feed line (19, 20) leading to the forward flow line (5).

7. Fuel supply system according to at least one of the preceding claims, **characterized in that** a non-return valve (21, 22) is arranged in each of the feed lines (19, 20).

## Revendications

1. Système d'alimentation en carburant destiné à alimenter en carburant un moteur à combustion interne (7) d'un véhicule automobile et comportant deux unités d'alimentation (2, 3) disposées dans un réservoir à carburant et branchées en parallèle, **caractérisé par le fait que** la deuxième unité d'alimentation (2, 3) est conçue pour faire fonctionner au moins une pompe à jet aspirant (23, 24) refoulant du carburant dans un pot d'accumulation (9, 10) de la première unité d'alimentation (2, 3).

2. Système d'alimentation en carburant selon la revendication 1, **caractérisé par le fait que** chaque unité d'alimentation (2, 3) est reliée à une pompe à jet aspirant (23, 24) et que les pompes à jet aspirant (23, 24) sont conçues pour refouler du carburant dans des pots d'accumulation (9, 10), dans chaque cas, de l'autre unité d'alimentation (2, 3).

3. Système d'alimentation en carburant selon la revendication 1 ou 2, **caractérisé par le fait que** chaque unité d'alimentation (2, 3) est reliée à une pompe à jet aspirant (23, 24) et que les pompes à jet aspirant (23, 24) refoulent dans une conduite commune (27), que la conduite commune (27) est conçue pour remplir les pots d'accumulation des deux unités d'alimentation (2, 3) et qu'une soupape à flotteur est disposée sur chacune des conduites (27) conduisant aux unités d'alimentation (2, 3).

4. Système d'alimentation en carburant selon au moins l'une des revendications précédentes, **caractérisé par le fait qu'**une conduite de reflux (8) revenant d'un régulateur de pression (6) conduit dans les pots d'accumulation (9, 10) des deux unités d'alimentation (2, 3).

5. Système d'alimentation en carburant selon la revendication 4, **caractérisé par le fait qu'**une soupape à flotteur est disposée sur chacune des conduites de reflux (8) conduisant aux unités d'alimentation (2, 3).

6. Système d'alimentation en carburant selon au moins l'une des revendications précédentes, **caractérisé par le fait que** les unités d'alimentation (2, 3) ont chacune une conduite de refoulement (19, 20) conduisant à la conduite d'alimentation montante (5).

7. Système d'alimentation en carburant selon au moins l'une des revendications précédentes, **caractérisé par le fait qu'**une soupape de non-retour (21, 22) est disposée sur chacune des conduites de refoulement (19, 20).
